# EUROPÄISCHE PATENTSCHRIFT

(11) **EP 3 710 134 B1**
(45) Veröffentlichungstag und Bekanntmachung des Hinweises auf die Patenterteilung: **12.01.2022**
(21) Anmeldenummer: 18803544.8
(22) Anmeldetag: 06.11.2018
(51) Int. Cl.: B01D 53/00, B01D 53/26

(54) **VERFAHREN UND VORRICHTUNG ZUR REINIGUNG ODER ZERLEGUNG UND KÜHLUNG EINES GASGEMISCHS**
METHOD AND DEVICE FOR PURIFICATION OR SEPARATION AND COOLING OF A GAS MIXTURE
PROCÉDÉ ET DISPOSITIF DE NETTOYAGE OU DE DÉCOMPOSITION ET DE REFROIDISSEMENT D'UN MÉLANGE GAZEUX

(30) Priorität: 15.11.2017 EP 17020533
(43) Veröffentlichungstag der Anmeldung: 23.09.2020
(73) Patentinhaber: Linde GmbH, 82049 Pullach (DE); RAG Austria AG, 1015 Wien (AT)
(72) Erfinder: ADLER, Robert, 2201 Gerasdorf (AT); KLEIN, Ekkehardt, 3434 Katzelsdorf (AT); NAGL, Christoph, 2534 Alland (AT); POLLAK, Andreas, 7212 Forchtenstein (AT); MUCHITSCH, Werner, 7533 Ullersdorf (AT); KURRAS, Mathias, 2201 Gerasdorf (AT); HERNEGGER, Michael, 2534 Alland (AT); KAROSCHITZ, Thomas, 1220 Wien (AT); HAUSER, Leopold, 3100 St Pölten (AT)
(74) Vertreter: Fischer, Werner
(86) Internationale Anmeldenummer: PCT/EP2018/025280
(87) Internationale Veröffentlichungsnummer: WO 2019/096443

(56) Entgegenhaltungen:
- EP-A1- 2 277 614
- WO-A1-2017/025173
- US-A1- 2016 003 527

## Beschreibung

Die Erfindung betrifft ein Verfahren und eine Vorrichtung zur Reinigung und Verflüssigung eines Gasgemischs. Insbesondere liegt die Erfindung auf dem Gebiet der Reinigung und Verflüssigung von Erdgas, Erdölbegleitgas und Biogas.

Herkömmlicherweise wird Erdgas, Erdölbegleitgas und Biogas in gasförmigem Zustand gewonnen, wobei das gewonnene Gas als ein Gasgemisch vorliegt, welches ein Hauptgas, wie etwa Methan, und Begleitstoffe aufweist bzw. umfasst. Die Begleitstoffe können dabei unerwünschte Begleitstoffe darstellen, wie etwa Wasser und/oder Kohlendioxid, etc. welche dem Gasgemisch nachteilhafte Eigenschaften verleihen können. Insbesondere können derartige unerwünschte Begleitstoffe die Verflüssigung und/oder Weiterverarbeitung und/oder Verwertung des Gasgemischs erschweren oder gar ganz verhindern und das Gasgemisch bzw. Erdgas, Erdölbegleitgas und/oder Biogas als solches bzw. das Rohgas, unbrauchbar machen. Dies kann insbesondere daher rühren, dass derartige Begleitstoffe oftmals einen höheren Kondensationspunkt aufweisen als das Hauptgas, d.h. dass diese Gase bei einer höheren Temperatur flüssig und/oder fest werden als das Hauptgas, und dementsprechend beim Verflüssigen des Gasgemisches, d.h. beim Abkühlen des Gasgemisches auf eine Temperatur, bei welcher das Hauptgas in die flüssige Phase übergeht, kondensieren und/oder ausfallen und die Vorrichtung, in welcher der Verflüssigungsprozess stattfindet, beeinträchtigen. Beispielsweise können derartige Begleitstoffe zum Verstopfen von Leitungen und/oder Ventilen und/der Düsen und/oder Engstellen und/oder von anderen Elementen der Vorrichtung führen, woraufhin der Betrieb der Vorrichtung zur Verflüssigung eingeschränkt oder gar unterbunden werden kann.

Entsprechend ist es herkömmlicherweise erforderlich, ein als Gasgemisch vorliegendes Erdgas, Erdölbegleitgas und/oder Biogas vor dessen Verflüssigung zu reinigen, d.h. die Begleitstoffe zumindest teilweise bzw. zumindest manche davon zu entfernen bzw. abzuscheiden. Mit anderen Worten sind herkömmliche Verflüssiger nicht in der Lage, ein als ungereinigtes Gasgemisch vorliegendes Erdgas, Erdölbegleitgas und/oder Biogas zu verflüssigen, ohne dass dieses zuvor gereinigt wurde. Somit sind herkömmlicherweise zumindest zwei getrennte Prozesse zur Verflüssigung von Erdgas, Erdölbegleitgas und/oder Biogas bzw. eines Gasgemischs erforderlich, wobei in einem ersten Prozess eine Reinigung des Gasgemischs stattfindet und erst anschließend in einem separaten Prozess eine Abkühlung und Verflüssigung des gereinigten Gasgemischs stattfinden kann.

Zudem kann das als Gasgemisch vorliegende Erdgas, Erdölbegleitgas auch noch weitere Begleitstoffe aufweisen, wie etwa höhere Kohlenwasserstoffe, welche prinzipiell der Verwertung und/oder für die Verflüssigung unschädlich sein können und welche vorteilhafterweise im Gasgemisch verbleiben können, da diese den Brennwert des Gasgemischs weiter erhöhen können.

Im Stand der Technik werden beispielsweise für die Reinigung bzw. Anreicherung von Gasgemischen bzw. Erdgas, Erdölbegleitgas und/oder Biogas Druckwechsel-Adsorptionsverfahren verwendet, mittels welcher herkömmlicherweise die Begleitstoffe zumindest teilweise aus dem Gasgemisch entfernt werden. Auch sind Temperaturwechsel-Adsorptionsverfahren zur Reinigung von Gasgemischen bekannt, welche auf einer thermischen Abhängigkeit der Adsorption beruhen. Ferner kommen auch Absorptionsverfahren, wie z.B. die Glykoltrocknung, zur Anwendung.

Es ist somit die Aufgabe der vorliegenden Erfindung, ein Verfahren sowie eine Vorrichtung zum Kühlen und/oder Reinigen oder Zerlegen eines Gasgemischs bereitzustellen, welches einen geringeren technischen Aufwand und einen geringeren Kostenaufwand erfordert.

Diese Aufgabe wird durch ein Verfahren und eine Vorrichtung mit den Merkmalen des jeweiligen unabhängigen Anspruchs gelöst. Bevorzugte Ausführungsformen sind Gegenstände der abhängigen Ansprüche.

In einem ersten Aspekt betrifft die Erfindung ein Verfahren gemäß Anspruch 1 zur Reinigung und Verflüssigung eines Gasgemischs umfassend ein Hauptgas und Begleitstoffe, wobei zumindest ein erster Begleitstoff und ein zweiter Begleitstoff eine höhere Kondensationstemperatur aufweisen als das Hauptgas. Das Verfahren umfasst ein Kühlen des Gasgemisches mittels einer ersten Kühlstufe auf eine erste Temperatur unterhalb einer Kondensationstemperatur eines ersten Begleitstoffs der mehreren Begleitstoffe und oberhalb der Kondensationstemperatur des Hauptgases derart, dass der erste Begleitstoff zumindest teilweise kondensiert, sowie ein Abscheiden zumindest eines Teils des kondensierten ersten Begleitstoffs derart, dass der erste Begleitstoff zumindest teilweise dem Gasgemisch entzogen wird. Zudem umfasst das Verfahren ein Kühlen des Gasgemisches mittels einer zweiten Kühlstufe auf eine zweite Temperatur unterhalb einer Kondensationstemperatur eines zweiten Begleitstoffs der mehreren Begleitstoffe und oberhalb der Kondensationstemperatur des Hauptgases derart, dass der zweite Begleitstoff zumindest teilweise kondensiert, sowie ein Abscheiden zumindest eines Teils des kondensierten zweiten Begleitstoffs derart, dass der zweite Begleitstoff zumindest teilweise dem Gasgemisch entzogen wird. Dabei ist die erste Temperatur höher als die zweite Temperatur und die zweite Temperatur ist höher als die Kondensationstemperatur des Hauptgases. Die erste Kühlstufe und die zweite Kühlstufe umfassen jeweils einen Wärmetauscher mit integriertem Reinigungselement. Zudem wird das Gasgemisch stromab der ersten und der zweiten Kühlstufe in einer Verflüssigerstufe auf eine Temperatur unterhalb der Kondensationstemperatur des Hauptgases abgekühlt.

Die Begleitstoffe müssen nicht bereits im ursprünglichen Gasgemisch vorhanden sein, sondern können auch erst während des Reinigungs- und Verflüssigungsverfahrens entstehen. Beispielsweise kann sich unter den Druck- und Temperaturbedingungen des erfindungsgemäßen Verfahrens Methanhydrat bilden, welches ebenfalls aus dem Hauptgas abgeschieden werden soll.

Beschrieben wird auch eine Vorrichtung, in welcher die Erfindung durchgeführt werden kann, zur Reinigung und/oder Zerlegung und Kühlung eines Gasgemischs umfassend ein Hauptgas und Begleitstoffe, wobei zumindest ein erster Begleitstoff und ein zweiter Begleitstoff eine höhere Kondensationstemperatur aufweisen als das Hauptgas. Die Vorrichtung umfasst eine erste Kühlstufe, welche dazu ausgelegt ist, das Gasgemisch auf eine erste Temperatur unterhalb einer Kondensationstemperatur eines ersten Begleitstoffs der mehreren Begleitstoffe und oberhalb der Kondensationstemperatur des Hauptgases derart zu kühlen, dass der erste Begleitstoff zumindest teilweise kondensiert, sowie einen ersten Abscheider, welcher dazu ausgelegt ist, zumindest einen Teil des kondensierten ersten Begleitstoffs derart abzuscheiden, dass der erste Begleitstoff zumindest teilweise dem Gasgemisch entzogen wird. Zudem umfasst die Vorrichtung eine zweite Kühlstufe, welche dazu ausgelegt ist, das Gasgemisch auf eine zweite Temperatur unterhalb einer Kondensationstemperatur eines zweiten Begleitstoffs der mehreren Begleitstoffe und oberhalb der Kondensationstemperatur des Hauptgases derart zu kühlen, dass der zweite Begleitstoff zumindest teilweise kondensiert, sowie einen zweiten Abscheider, welcher dazu ausgelegt ist, zumindest einen Teil des kondensierten zweiten Begleitstoffs derart abzuscheiden, dass der zweite Begleitstoff zumindest teilweise dem Gasgemisch entzogen wird. Dabei ist die erste Temperatur höher als die zweite Temperatur und die zweite Temperatur höher als die Kondensationstemperatur des Hauptgases. Die erste Kühlstufe und die zweite Kühlstufe umfassen dabei jeweils einen Wärmetauscher mit integriertem Reinigungselement. Zudem umfasst die Erfindung stromab der ersten und der zweiten Kühlstufe eine Verflüssigerstufe zum Verflüssigen des Hauptgases.

Beispielsweise umfasst das Gasgemisch Erdgas, Erdölbegleitgas und/oder Biogas oder besteht daraus und umfasst das Hauptgas Methan oder besteht daraus.

Erfindungsgemäß umfassen die erste Kühlstufe und die zweite Kühlstufe jeweils einen Wärmetauscher mit integriertem Reinigungselement. Solche Wärmetauscher sind insbesondere aus der WO 2017/025173 A1 bekannt. Ein solcher Wärmetauscher mit integriertem Reinigungselement kann beispielsweise dadurch realisiert werden, dass ein erstes Zylinderrohr und eine koaxial im ersten Zylinderrohr verlaufende Gewindespindel vorgesehen sind, wobei die Innenfläche des ersten Zylinderrohrs Führungsnuten aufweist und wobei auf der Gewindespindel ein Reinigungselement derart angebracht ist, dass das Reinigungselement durch Drehung der Gewindespindel in axialer Richtung entlang der Führungsnuten verschoben wird. Dieses Reinigungselement dient zur Reinigung von Ablagerungen auf den Wärmeübertragungsflächen zwischen der Innenfläche des ersten Zylinderrohrs und der Gewindespindel. Dieses Reinigungselement ist entweder in Form eines Mitnehmers direkt auf der Gewindespindel angebracht oder an einem solchen Mitnehmer befestigt, der seinerseits direkt an der Gewindespindel angebracht ist. Ein Gasgemisch oder eine Flüssigkeit, welche zum Wärmetausch in einem Zwischenraum zwischen dem ersten Zylinderrohr und der Gewindespindel strömen, werden insbesondere beim Abkühlen Ablagerungen auf den Wärmeübertragungsflächen hinterlassen. Bei Erdgas, Erdölbegleitgas und/oder Biogas als Gasgemisch bestehen diese Ablagerungen insbesondere aus Begleitstoffen und Wasser. Die genannten Ablagerungen können von dem Reinigungselement aufgenommen und/oder wegtransportiert bzw. mitgenommen werden. Zur Reinigung wird also die Gewindespindel betätigt, wodurch das Reinigungselement in axialer Richtung innerhalb des ersten Zylinderrohrs verschoben wird, wodurch es Ablagerungen von den wärmeübertragenden Flächen entfernen kann. Solche Ablagerungen entstehen insbesondere an der Gewindespindel sowie an den axial verlaufenden Führungsnuten des Wärmetauschers. Das Reinigungselement reinigt diese Flächen ab. Für das Reinigungselement können vorzugsweise Stähle, im speziellen Vergütungsstähle und Legierungen aus Buntmetallen, ferner kaltzähe Nickel-Legierungen (wie Inconel) sowie Gusswerkstoffe, verwendet werden.

Bei Normalbetrieb des Wärmetauschers befindet sich das Reinigungselement vorzugsweise in einer Ruheposition, in der es den Wärmetausch zwischen dem Gasgemisch und Kühlmittel geringstmöglich oder gar nicht beeinflusst. Statt eines Kühlmittels ist selbstverständlich auch die Verwendung eines Wärmemittels möglich, wenn das Gasgemisch erwärmt werden soll. Die Reinigung erfolgt beispielsweise nach empirisch ermittelten Periodendauern oder bei Erreichen eines extern gemessenen maximal zulässigen Differenzdrucks, der auf eine Verkleinerung des freien Strömungsquerschnitts für das Gasgemisch bedingt durch Ablagerungen schließen lässt.

Der Wärmetauscher mit Reinigungselement erlaubt eine effektive Reinigung der Wärmeübertragungsflächen, ohne dass der Wärmetauscher manuell geöffnet werden muss. Der geschilderte Reinigungsprozess ist einfach ausführbar. Hierzu muss lediglich die Gewindespindel gedreht werden, um das Reinigungselement in axialer Richtung zu verschieben. Weitere Prozessschritte sind nicht erforderlich. Es ist insbesondere vorteilhaft, wenn das Reinigungselement vorhandene Ablagerungen mitnimmt bzw. wegtransportiert. Auf diese Weise kann eine Veränderung und somit Abnutzung bzw. Alterung des Reinigungselements verhindert werden.

Eine Kühlstufe kann dabei eine Kühleinrichtung aufweisen, in welcher das Gasgemisch in einem Prozessschritt auf eine bestimmte Temperatur abgekühlt wird. Beispielsweise kann die Kühleinrichtung einen Wärmeübertrager aufweisen, mittels welchem dem Gasgemisch in der Kühlstufe Wärme entzogen werden kann. Die Kühlstufe bzw. die Kühleinrichtung bzw. der Wärmeübertrager kann dabei vorzugsweise gekühlt werden, um die von bzw. in der Kühlstufe dem Gasgemisch entzogene Wärme von der Kühlstufe bzw. der Kühleinrichtung abzuführen. Ferner kann die Kühlstufe derart gekühlt werden, dass diese eine deutlich niedrigere Temperatur als das Gasgemisch aufweist, um einen effizienten Wärmeübertrag von dem Gasgemisch auf die Kühlstufe bzw. die Kühleinrichtung zu ermöglichen. Da das erfindungsgemäße Verfahren bzw. die erfindungsgemäße Vorrichtung zumindest zwei Kühlstufen aufweisen, findet der Kühlvorgang des Gasgemischs vorzugsweise stufenweise in zumindest zwei Kühlschritten statt, wobei in jeder Kühlstufe ein sukzessives Abkühlen des Gasgemischs auf eine tiefere Temperatur als die Temperatur des Gasgemischs vor der Kühlstufe erreicht wird. Während dieser Kühlphasen in den Kühlstufen wird das Hauptgas im Gasgemisch jedoch noch nicht verflüssigt.

Bevorzugt wird die Temperatur, auf welche das Gasgemisch in einer bestimmten Kühlstufe abgekühlt wird, derart eingestellt bzw. vorbestimmt, dass diese wenige Grad Kelvin, beispielsweise 1 K bis 20 K, unterhalb der Kondensationstemperatur eines in der jeweiligen Kühlstufe abzuscheidenden Begleitstoffs liegt, sodass in der jeweiligen Kühlstufe gezielt ein oder mehrere Begleitstoffe dem Gasgemisch entzogen bzw. ausgefällt werden können.

Das Abscheiden zumindest eines Teils des kondensierten Begleitstoffs bedeutet dabei, dass der kondensierte Begleitstoff dem Gasgemisch entzogen wird. Dies kann beispielsweise darauf beruhen, dass bei der in der vorhergehenden Kühlstufe erreichten Temperatur des Gasgemischs der abzuscheidende Begleitstoff in flüssiger und/oder fester Form vorliegt, während das Hauptgas weiterhin gasförmig vorliegt, und somit die verschiedenen vorliegenden Phasen auf einfache Weise separiert werden können. Beispielsweise kann sich das Abscheiden einen Effekt zu Nutze machen, dass der bzw. die kondensierten Begleitstoffe der Schwerkraft folgend nach unten absinken und somit an einem Boden des Abscheiders extrahiert bzw. entnommen werden können. Alternativ oder zusätzlich können vorzugsweise Filterelemente vorgesehen sein, mittels welcher die kondensierten Begleitstoffe aus dem Gasgemisch abgeschieden werden können. Ein Abscheider kann dabei separat von einer Kühlstufe ausgebildet sein oder in eine Kühlstufe integriert sein.

Die Erfindung bietet dabei den Vorteil, dass bereits während der Reinigung des Gasgemischs ein Kühlen des Gasgemischs erfolgt und somit ein Kühlen des Gasgemischs bereits mit der Reinigung des Gasgemischs einhergeht. Insbesondere können erfindungsgemäß bereits während des Reinigens des Gasgemischs sehr tiefe Temperaturen des Gasgemischs erzielt werden, so dass bereits während und/oder nach dem Reinigen des Gasgemischs Temperaturen des Gasgemischs erreicht werden können, welche nur wenige Kelvin, beispielsweise 1 K bis 20 K, über der Kondensationstemperatur des Hauptgases bzw. des Gasgemisches liegen. Dadurch wird der Aufwand für das nachträgliche Verflüssigen des Gasgemisches deutlich reduziert, da die Temperaturdifferenz zur gewünschten Verflüssigungstemperatur wesentlich geringer ist als bei der Verwendung herkömmlicher Reinigungsverfahren und somit dem Gasgemisch zur Verflüssigung vorzugsweise deutlich weniger Wärme entzogen werden muss.

Erfindungsgemäß wird das Kühlen des Gasgemischs während des Reinigens des Gasgemischs oberhalb der Kondensationstemperatur des Gasgemischs bzw. des Hauptgases beendet, um ein Kondensieren des Hauptgases bzw. Gasgemischs zu vermeiden. Dies ermöglicht, dass das Gasgemisch weiterhin in gasförmiger Phase vorliegt und daher eine erfindungsgemäße Vorrichtung nicht notwendigerweise zur Handhabung bzw. zum Prozessieren eines flüssigen Gasgemischs ausgelegt sein muss. Alternativ kann jedoch eine erfindungsgemäße Vorrichtung bzw. das erfindungsgemäße Verfahren vorzugsweise auch dazu ausgelegt sein, bereits während des Reinigens des Gases das Gasgemisch bereits auf oder unter die Kondensationstemperatur des Hauptgases abzukühlen und das gereinigte Gasgemisch bereits in flüssiger Form bereitzustellen.

Ferner bietet die Erfindung den Vorteil, dass auch Gasgemische, welche einen hohen Anteil unerwünschter Begleitstoffe aufweisen direkt, d.h. ohne vorherige Reinigung, gekühlt werden können und auf somit vorzugsweise unreine Gasgemische, wie etwa Erdgas , Erdölbegleitgas und/oder Biogas , die häufig einen besonders hohen Anteil an unerwünschten Begleitstoffen und/oder einen besonders hohen Wasseranteil aufweisen, direkt der Kühlung zugeführt werden können, ohne dass das Auftreten von bleibenden, beeinträchtigenden Ablagerungen, insbesondere an Wärmeübertragungsflächen, zu befürchten ist, welche den Kühlprozess bzw. die Vorrichtung zum Kühlen beeinträchtigen könnten. Folglich bietet die Erfindung die Möglichkeit sowohl das Reinigen als auch das Kühlen bzw. Verflüssigen eines Gasgemischs zu beschleunigen und den technischen Aufwand zu reduzieren und somit die Kosten für die Reinigung bzw. Verflüssigung des Gasgemischs zu reduzieren und die Effizienz zu steigern.

Ferner bietet die Erfindung den Vorteil, dass nicht-störende bzw. erwünschte Begleitstoffe, wie etwa höhere Kohlenwasserstoffe, nicht notwendigerweise aus dem Gasgemisch abgeschieden werden müssen, da die unerwünschten Begleitstoffe, wie etwa Wasser oder CO₂, auch abgeschieden werden können, ohne beispielsweise die höheren Kohlenwasserstoffe abzuscheiden. Dies bietet einen Vorteil gegenüber der herkömmlichen Abscheidung von Begleitstoffen mittels Molsieben, welche auch die höheren Kohlenwasserstoffe nahezu vollständig abscheiden. Somit bietet die Erfindung die Möglichkeit, den Brennwert des gereinigten Gases durch das Belassen von Teilen höherer Kohlenwasserstoffe im Gasgemisch zu erhöhen. Insbesondere ist dabei vorteilhaft, dass vorzugsweise durch ein geeignetes Einstellen von Druck und/oder Temperatur des Gasgemischs bei der Zuführung des Gasgemischs zur Reinigung bzw. Kühlung höhere Kohlenwasserstoffe mitverflüssigt werden können.

Ferner bietet die Erfindung den Vorteil, dass eine erfindungsgemäße Vorrichtung vorzugsweise flexibel hinsichtlich der Zusammensetzung des Gasgemisches ist, d.h. dass vorzugsweise Rohgase in einem weiten Parameterbereich hinsichtlich der Begleitstoffe kühl- und verflüssigbar sind, während herkömmliche Verfahren keine Verflüssigung von unreinen Gasgemischen erlauben.

Ferner bietet die Erfindung den Vorteil, dass sich erfindungsgemäß kompakte Bauweisen realisieren lassen und somit eine erfindungsgemäße Vorrichtung vorzugsweise auch an abgelegenen Standorten einsetzbar ist. Ferner kann eine erfindungsgemäße Vorrichtung vorzugsweise durch eine Eigenversorgung mit elektrischer Energie durch einen Teil des zuvor gereinigten Gasgemischs, welches in einem Blockheizkraftwerk verwertet wird, versorgt werden. Ferner kann vorzugsweise in einem Blockheizkraftwerk aus einem verflüssigten Gasgemisch ausdampfendes Hauptgas mitverbrannt werden, wodurch beispielsweise Emissionen reduziert werden können.

Vorzugsweise umfasst das erfindungsgemäße Verfahren ferner zumindest ein weiteres Kühlen des Gasgemisches auf zumindest eine weitere Temperatur unterhalb einer Kondensationstemperatur zumindest eines weiteren Begleitstoffs derart, dass der zumindest ein weiterer Begleitstoff zumindest teilweise kondensiert, sowie ein Abscheiden zumindest eines Teils des zumindest einen weiteren Begleitstoffs derart, dass der zumindest eine weitere Begleitstoff zumindest teilweise dem Gasgemisch entzogen wird. Mit anderen Worten umfasst die Erfindung zumindest eine dritte Kühlstufe und einen dritten Abscheider, um beispielsweise das Gasgemisch noch weiter und/oder effizienter abzukühlen und/oder um weitere Begleitstoffe effizient aus dem Gasgemisch entfernen zu können. Besonders bevorzugt umfasst die Erfindung sogar mehr als drei Kühlstufen und/oder Abscheider, um den Kühl- und Reinigungsprozess noch effizienter auszugestalten. Dies bietet den Vorteil, dass im Verfahrensablauf größere Temperaturunterschiede bzw. eine größere Wärmeübertragung erreicht werden können und somit das Gasgemisch weiter abgekühlt werden kann und/oder weitere Begleitstoffe aus dem Gasgemisch abgeschieden werden können.

Vorzugsweise umfasst die Erfindung zudem ein Kühlen des Gasgemisches mittels einer Reinigungsendkühlstufe auf eine Reinigungsendtemperatur, wobei die Reinigungsendtemperatur maximal 20 K höher als die Kondensationstemperatur des Hauptgases ist. Vorzugsweise liegt die Reinigungsendtemperatur zwischen 1 K und 20 K, bevorzugt zwischen 1 K und 5 K, oberhalb der Kondensationstemperatur des Hauptgases. Mit anderen Worten umfasst die Erfindung vorzugsweise ein weiteres Kühlen des gereinigten Gasgemischs nach dem letzten Abscheider, um das erfindungsgemäß bereitgestellte, gereinigte und gekühlte Gasgemisch bei einer tieferen Temperatur bereitzustellen, als dies im letzten Abscheider vorliegt. Dies bietet den Vorteil, dass in einem Prozess das Gasgemisch bei einer besonders tiefen Temperatur bereitgestellt werden kann. Da das Gasgemisch jedoch eine Temperatur aufweist, die höher als die Kondensationstemperatur des Hauptgases ist, liegt das Gasgemisch dennoch in gasförmiger Phase vor, wenngleich der Aufwand zur anschließenden Verflüssigung des Gasgemischs minimiert wird. Dadurch können beispielsweise die Anforderungen an einen zu verwendenden Verflüssiger und/oder der Zeit- und/oder Kostenaufwand zur anschließenden Verflüssigung deutlich reduziert werden.

Erfindungsgemäß umfasst der erste Begleitstoff H₂O (Wasser) oder besteht daraus und vorzugsweise beträgt die erste Temperatur zumindest 233 K und höchstens 303 K, vorzugsweise 263 K bis 283 K. Dies bietet den Vorteil, dass dadurch ein gezieltes Abscheiden bzw. Ausfallen von Wasser bzw. Feuchtigkeit erreicht werden kann, was insbesondere für eine Zerlegung des Gasgemischs und die anschließende Verwertung der Begleitstoffe vorteilhaft sein kann. Vorzugsweise ist dazu der erste Abscheider als ein Schwallwasserabscheider ausgebildet oder weist einen solchen auf.

Erfindungsgemäß umfasst der zweite Begleitstoff CO₂ (Kohlendioxid) und höhere

Kohlenwasserstoffe, z.B. als Molekülketten oder Molekülringe vorliegende Kohlenwasserstoffe, oder besteht daraus und vorzugsweise beträgt die zweite Temperatur zumindest 213 K und höchstens 255 K. Dies bietet den Vorteil, dass Kohlendioxid und/oder höhere Kohlenwasserstoffe gezielt aus dem Gasgemisch abgeschieden werden können, was insbesondere für eine Zerlegung des Gasgemischs und die anschließende Verwertung der Begleitstoffe vorteilhaft sein kann.

In einer weiteren Ausführungsform ist oder umfasst der erste und/oder der zweite Begleitstoff H₂S.

Vorzugsweise umfasst die Erfindung ferner ein Verflüssigen des gekühlten und gereinigten bzw. zerlegten Gasgemisches in einer Verflüssigerstufe derart, dass das Hauptgas eine Verflüssigungstemperatur aufweist, welche zumindest 1 K und maximal 60 K unterhalb der Kondensationstemperatur des Hauptgases liegt. Mit anderen Worten beschränkt sich gemäß dieser bevorzugten Ausführungsform das Kühlen des Gasgemischs nicht auf eine Temperatur oberhalb der Kondensationstemperatur des Hauptgases, sondern umfasst auch ein Verflüssigen des Gasgemisches bzw. des Hauptgases. Gemäß dieser bevorzugten Ausführungsform ist es somit möglich, sowohl das Reinigen bzw. Zerlegen als auch das Verflüssigen des Gasgemisches bzw. des Hauptgases in einem Prozess durchzuführen, was besonders vorteilhaft für die Effizienz des Reinigungs- und Verflüssigungsverfahrens sein kann. Insbesondere kann vorzugsweise eine Vorrichtung zum Kühlen und Verflüssigen als eine Einheit bereitgestellt werden, welche erfindungsgemäß das Gasgemisch kühlt, während des Kühlprozesses in den mehreren Kühlstufen von Begleitstoffen reinigt und sodann anschließend verflüssigt, sodass das Gasgemisch und insbesondere das Hauptgas in flüssiger Phase vorliegt. Vorzugsweise kann eine Verflüssigungsstufe, welche insbesondere einen Kreislaufverflüssiger aufweisen kann, zum Verflüssigen des gekühlten und gereinigten Gasgemischs verwendet werden. Die Verflüssigungsstufe und/oder der Kreislaufverflüssiger können vorzugsweise in eine erfindungsgemäße Vorrichtung zum Kühlen und Verflüssigen des Gasgemischs gemäß einer bevorzugten Ausführungsform integriert sein.

Vorzugsweise umfasst die Erfindung ein zyklisches Reinigen zumindest eines Teils der Kühlstufen und/oder der Abscheider, um kondensierte Begleitstoffe zumindest teilweise abzuführen. Dies ermöglicht, dass die Kühlstufen und/oder die Abscheider auch dann zuverlässig verwendbar sind, falls dort Kondensate, insbesondere der Begleitstoffe, auftreten, da durch das zyklische Reinigen der Kühlstufen und/oder der Abscheider ein Ablagern und/oder Ansammeln der Kondensate vermieden wird und somit ein Verstopfen und/oder Verengen der Kühlstufen und/oder Abscheider vermieden werden kann.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie in den Ansprüchen festgelegt, zu verlassen.

Die Erfindung ist anhand eines Ausführungsbeispiels in den Zeichnungen schematisch dargestellt und wird im Folgenden unter Bezugnahme auf die Zeichnungen beschrieben.

Figurenbeschreibung
- Figur 1: zeigt in einer schematischen Darstellung eine Vorrichtung zur Reinigung und Verflüssigung eines Gasgemischs gemäß einer ersten bevorzugten Ausführungsform.
- Figur 2: zeigt eine zweite Ausführungsform.

### Detaillierte Beschreibung der Zeichnungen

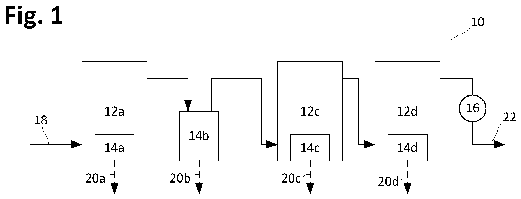

Figur 1 zeigt in einer schematischen Darstellung eine Vorrichtung 10 zur Reinigung und Verflüssigung eines Gasgemischs gemäß einer ersten bevorzugten Ausführungsform. Die Vorrichtung 10 weist drei Kühlstufen 12a, 12c und 12d auf, welche sequenziell hintereinander angeordnet sind und welche sequenziell hintereinander von dem Gasgemisch durchlaufen werden. Ferner weist die Vorrichtung 10 einen Schwallwasserabscheider 14b auf, welcher zwischen der ersten Kühlstufe 12a und der zweiten Kühlstufe 12c angeordnet ist. Zudem umfasst die Vorrichtung 10 eine Verflüssigungsstufe 16, welche nach den Kühlstufen 12a, 12c, 12d angeordnet ist.

Vorzugsweise weisen alle Kühlstufen einen Wärmeübertrager bzw. einen Wärmetauscher auf. Die Kühlung der Wärmeübertrager der einzelnen Kühlstufen 12a, 12c und 12d kann dabei bis zu einer Temperatur von etwa 213 K mittels einer oder mehrerer Kältemaschinen erfolgen und unterhalb von 213 K mittels flüssigen Stickstoffs. Gemäß anderen bevorzugten Ausführungsformen kann eine Kühlung aller Kühlstufen bzw. Wärmeübertragern ausschließlich mittels flüssigen Stickstoffs oder ausschließlich mittels Kältemaschinen erfolgen. Die Kältemaschinen können beispielsweise Luft als Arbeitsmedium nutzen. Beispielsweise können die Wärmeübertrager vorzugsweise mittels eines Vakuummantels und/oder einer Kaltschaumisolierung und/oder Schüttungen aus einem Aerogel thermisch von ihrer Umgebung isoliert werden.

Sofern zumindest ein Wärmeübertrager mit flüssigem Stickstoff gekühlt wird, kann gemäß einer bevorzugten Ausführungsform der zur Kühlung verwendete und dabei aufgeheizte Stickstoff nach dem Wärmeeintrag durch den Wärmeübertrager einer Expansionsturbine zugeführt werden. In der Expansionsturbine kann eine durch die Expansion des Stickstoffs verrichtete Arbeit zu einem Teil in elektrische Energie umgewandelt werden, welche beispielsweise der Vorrichtung wieder zugeführt werden kann um den Bedarf der Vorrichtung 10 an separat zugeführter elektrischer Energie zu reduzieren.

Über einen Einlass 18 wird der ersten Kühlstufe 12a das ungereinigte, zu reinigende und zu kühlende Gasgemisch zugeführt, welches beispielsweise als Erdgas, Erdölbegleitgas und/oder Biogas (Rohgas) vorliegen kann. Das Gasgemisch kann am Einlass 18 vorzugsweise eine Eingangstemperatur zwischen 248K und 313K, insbesondere zwischen 273K und 293K, insbesondere 293K, aufweisen und mit einem Eingangsdruck zwischen 6 und 200 bar, beispielsweise zwischen 6 und 63 bar, zugeführt werden. Beispielsweise kann die Vorrichtung 10 dazu ausgelegt sein, Massenströme des Gasgemisches von etwa 50 - 40.000 kg/h, insbesondere 70 - 1.500 kg/h, zu verarbeiten bzw. zu bewältigen.

Zum Reinigen des Gasgemisches wird in der Vorrichtung 10 in den einzelnen Kühlstufen 12a, 12c und 12d die Temperatur des Gasgemisches stufenweise gesenkt, um eine gezielte Kondensation von Begleitstoffen in dem Gasgemisch zu erreichen.

Zunächst wird in der ersten Kühlstufe 12a das Gasgemisch von der Eingangstemperatur auf eine Temperatur zwischen ca. 233K bis 303 K abgekühlt, vorzugsweise auf 275 K. Da diese Temperatur in der ersten Kühlstufe 12a unterhalb der Kondensationstemperatur bzw. des Schmelzpunktes von Wasser liegt, führt dies dazu, dass der als Wasseranteil vorliegende Begleitstoff des Gasgemisches in der ersten Kühlstufe 12a ausfriert. Das ausgefrorene Wasser wird sodann mittels eines in die erste Kühlstufe 12a integrierten Abscheiders 14a aus dem Gasgemisch abgeschieden und über den Begleitstoffauslass 20a aus der Kühlstufe 12a abgeführt.

Um eine übermäßige Hydratbildung zu vermeiden, wird in dieser Stufe vorzugsweise die Temperatur des Gasgemischs Erdgas und Erdölbegleitgas nicht unterhalb die Hydratbildungstemperatur abgesenkt, sondern vorsichtshalber nicht unterhalb eine Temperatur von etwa 1 K bis 20 K, vorzugsweise zumindest 2 K, oberhalb der Hydratbildungstemperatur belassen. Die Hydratbildungstemperatur ist dabei Druck- und Gasgemisch abhängig. Der zugrundeliegende physikalische Prozess der Hydratbildung ist dem Fachmann bekannt. Abhängig von der Gaszusammensetzung und den Druckbedingungen kann der Fachmann die Hydratbildungstemperatur bestimmen.

Das restliche Gasgemisch wird sodann aus der ersten Kühlstufe 12a in den Schwallabscheider 14b geleitet, welcher erneut von dem Gasgemisch als Beistoff mitgeführtes Wasser und/oder vom Gasgemisch mitgezogenes Freiwasser abscheidet und über den Beistoffauslass 20b abführt

Nach dem Schwallwasserabscheider 14b wird das Gasgemisch der zweiten Kühlstufe 12c zugeführt, wo das Gasgemisch auf eine Temperatur zwischen 213 K und 255 K, vorzugsweise zwischen 213 K und 233 K, abgekühlt wird. Dabei gefriert die Restfeuchtigkeit, d.h. dass der noch im Gasgemisch vorhandene Wasseranteil in den festen Aggregatzustand übergeht, und Methanhydrat fällt an Wärmeübertragerflächen des Wärmeübertragers der zweiten Kühlstufe 12c aus. Dazu wird die Hydratbildungskurve unterschritten. Ferner werden in diesem Temperaturbereich bzw. in der zweiten Kühlstufe 12c auch andere Beistoffe, wie insbesondere CO₂, vom Gasgemisch abgeschieden.

Dabei ist der Wärmeübertrager der zweiten Kühlstufe 12c derart ausgebildet, dass dessen Wärmeübertragerflächen zyklisch gereinigt werden, um das daran ausgefallene Methanhydrat und etwaige andere darin enthaltene Substanzen von den Wärmeübertragerflächen abzuführen. Die abgeschiedene Restfeuchtigkeit und das an den Wärmeübertragerflächen ausgefallene Methanhydrat sowie die etwaigen anderen Substanzen können sodann mittels des Abscheiders 14c über den Beistoffauslass 20c abgeführt werden.

Danach wird das Gasgemisch der dritten Kühlstufe 12d zugeführt, wo das Gasgemisch auf eine Temperatur knapp oberhalb der Kondensationstemperatur des Hauptgases des Gasgemischs herabgekühlt wird. Insbesondere wird das Gasgemisch auf eine Temperatur von etwa 1 K bis 20 K, bevorzugt auf eine Temperatur von 1 K bis 5 K, besonders bevorzugt 2 K, oberhalb der Kondensationstemperatur des Hauptgases herabgekühlt. Da im vorliegenden Fall das Hauptgas als Methan vorliegt, welches eine Kondensationstemperatur von ca. 111 K aufweist, wird in der dritten Kühlstufe 12d Temperatur des Gasgemisches vorzugsweise auf etwa 113 K reduziert. Auch in der dritten Kühlstufe 12d kann ein Abscheider 14d vorgesehen sein. Über diesen Abscheider 14d können analog zu den oben beschriebenen Abscheidern 14a und 14c unerwünschte Substanzen abgeschieden und ausgeschleust werden.

Die Kühlstufen 12a, 12c und 12d zur Reinigung des Gasgemischs werden dabei vorzugsweise derart betrieben, dass in der ersten Stufe 12a ein Großteil des Wassers aus dem Gasgemisch ausfällt. Die weiteren Kühlstufen 12c und 12d reduzieren sodann hauptsächlich weitere andere Begleitstoffe, wie etwa CO₂ und höhere Kohlenwasserstoffe. Das Abscheiden der höheren Kohlenwasserstoffe erfolgt dabei lediglich im Rahmen der Ausfällung entsprechend einer Durchschreitung der einzelnen Kühlstufen bzw. Temperaturniveaus, wohingegen noch Teile gelöster höherer Kohlenwasserstoffe im Gasgemisch verbleiben und dessen Brennwert bzw. Energieinhalt erhöhen. Insbesondere können die Anteile der höheren Kohlenwasserstoffe im Erdgas und Erdölbegleitgas durch gezielte Steuerung des Einlassdrucks und/oder der Einlasstemperatur des Gasgemischs gesteuert werden.

Anschließend wird das gereinigte Gasgemisch der Verflüssigungsstufe 16 zugeführt, in welcher das Gasgemisch vorab isenthalp über zumindest eine Drossel, welche beispielsweise in Form einer Blende oder eines Druckminderers vorliegt, auf einen Druck von etwa 1 bis 20 bar, vorzugsweise 1 bis 4 bar, reduziert. Danach erfolgt eine Kreislaufverflüssigung des Gasgemischs, sodass das Gasgemisch eine Unterkühlung unter die Kondensationstemperatur von etwa 1 K bis 60 K, vorzugsweise 1 K bis 30 K, besonders bevorzugt 20 K, aufweist. Das Maß der maximalen Unterkühlung erfolgt dabei in Abhängigkeit zum Abstand der Soliduslinie im Phasendiagramm von Methan, welche in einem Druckbereich zwischen 1 und 100 bar bei etwa 91 K liegt. Am Auslass 22 der Verflüssigungsstufe steht sodann das Gasgemisch in gereinigter und verflüssigter Form, entsprechend dem gewählten Druck und der Temperatur, bereit.

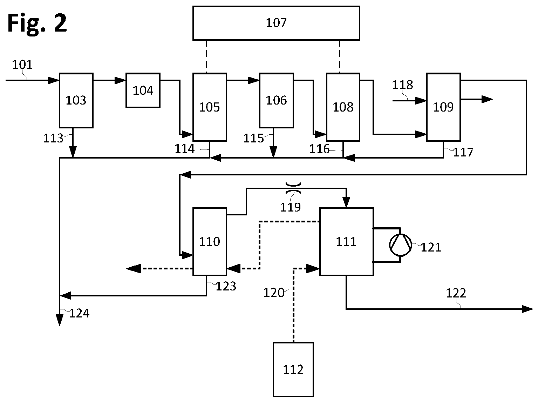

Figur 2 zeigt eine zweite Ausführungsform zur Reinigung und Verflüssigung von Erdgas. Das Erdgas und Verunreinigungen enthaltende Gasgemisch 101 wird zunächst einem ersten Schwallwasserabscheider 103 zugeführt, um in dem Gasgemisch befindliches freies Wasser auszuscheiden. Das abgetrennte Wasser wird über Leitung 113 aus dem Schwallwasserabscheider 103 abgeführt.

Das Gasgemisch kann anschließend einer Vorrichtung 104 zur Druckabsenkung zugeführt und dann in einem ersten Wärmetauscher 105 auf eine Temperatur zwischen 263 K und 283 K abgekühlt werden. Die Vorrichtung 104 zur Druckabsenkung ist nicht zwingend notwendig und kann gegebenenfalls auch entfallen. Wasser wird aus dem Gasgemisch auskondensiert und über Leitung 114 abgeführt. In dieser Stufe wird vorzugsweise die Temperatur nur soweit abgesenkt, dass die Hydratbildungskurve noch nicht unterschritten wird. Je nach Erdgaszusammensetzung und Druck ergeben sich unterschiedliche Hydratbildungskurven. Entsprechend kann auch die im ersten Wärmetauscher erreichte Endtemperatur von Einsatz zu Einsatz differieren.

Zur Ausfällung von mitgerissenem Wasser folgt ein weiterer Schwallwasserabscheider 106, in dem Wasser aus dem Gasgemisch abgetrennt und über Leitung 115 abgeschieden wird.

Das gekühlte und vorgereinigte Gasgemisch wird in einem weiteren Wärmetauscher 108 auf eine Temperatur von 233 K bis 213 K herabgekühlt. Dabei frieren Restfeuchtigkeit und Methanhydrat an den Wärmetauscherflächen aus. Zudem werden Reststoffe, wie zum Beispiel CO2, abgetrennt. Die Wärmetauscherflächen werden, wie oben bereits ausgeführt, regelmäßig gereinigt. Das hierbei gewonnene Kondensat wird über Leitung 116 aus dem Wärmetauscher 108 abgezogen.

Die beiden Wärmetauscher 105 und 108 werden von einer Kältemaschine 107 gekühlt. Die Kältemaschine 107 verfügt über zwei Kreise, wobei ein erster Kreis dem ersten Wärmetauscher 105 zugeordnet ist und ein zweiter Kühlkreis dem zweiten Wärmetauscher 108 zugeordnet ist.

Stromabwärts des Wärmetauschers 108 wird das Gasgemisch in einem Wärmetauscher 109 bis knapp über die Kondensationstemperatur von Methan herabgekühlt. Es ist vorteilhaft, hierbei einen Sicherheitsabstand von 1 K bis 20 K, vorzugsweise 1 K bis 5 K, zur Kondensationstemperatur einzuhalten. Im Wärmetauscher 109 wird das Gasgemisch in Wärmeaustausch mit tiefkaltem, gasförmigem Stickstoff 118, insbesondere mit regasifiziertem Flüssigstickstoff, abgekühlt. Die Stickstoffversorgung wird beispielsweise über einen Flüssigstickstofftank 112 sichergestellt.

Das Gasgemisch wird in einem vierten Wärmetauscher 110 abschließend gereinigt, bevor es einem Verflüssiger 111 zugeführt wird. Stromaufwärts des Verflüssigers 111 wird das Gasgemisch isenthalp über eine Drossel 119 auf einen Druck von 1 bis 5 bar abgesenkt. Der Verflüssiger 111 und der Wärmetauscher 110 werden mit tiefkaltem Stickstoff 120 gekühlt. Der Stickstoff stammt ebenfalls aus dem Flüssigstickstofftank 112 und wird zunächst dem Verflüssiger 111 und anschließend dem Wärmetauscher 110 zugeführt.

Der Verflüssiger 111 umfasst einen Kreislaufförderer 121, der die Gasphase im Verflüssiger 111 umwälzt, sodass darin vorhandenes Methan sowie höhere Kohlenwasserstoffe kondensiert werden und sich in der Flüssigphase sammeln. Das so gewonnene, gereinigte Erdgas, Erdölbegleitgas und/oder Biogas wird aus dem Verflüssiger 111 als Produkt 122 abgezogen.

Alle Wärmetauscher 105, 108, 109, 110 sind mit einem integrierten Reinigungselement versehen, beispielsweise mit einem integrierten Reinigungselement wie es aus der WO 2017/025173 A1 bekannt ist.

Das in den Wärmetauschern 105, 108, 109, 110 und den Abscheidern 103, 106 abgeschiedene Kondensat 113, 114, 115, 116, 117, 123 wird einer Kondensatausschleusung 124 zugeführt.

In einer Variante der Erfindung, kann der für die Kühlung verwendete Stickstoff nach dem Wärmeeintrag durch den Wärmeübertrager 109, 110 und den Verflüssiger 111 einer Expansionsturbine zugeführt wird. In der Expansionsturbine wird die durch den Stickstoff bei der Expansion verrichtete Arbeit teilweise in elektrische Energie umgewandelt. Die elektrische Energie wird dem Gesamtsystem zugeführt und reduziert somit den Bedarf an elektrischer Versorgungsenergie.

Diese Variante kann ebenso mit Vorteil bei der oben beschriebenen ersten Ausführungsform eingesetzt werden.

## Patentansprüche

1. Verfahren zur Reinigung und Verflüssigung eines Gasgemischs umfassend ein Hauptgas bestehend aus Methan und Begleitstoffe, wobei zumindest ein erster Begleitstoff, der H₂O umfasst oder daraus besteht, und ein zweiter Begleitstoff, der CO₂ und höhere Kohlenwasserstoffe umfasst oder daraus besteht, eine höhere Kondensationstemperatur aufweisen als das Hauptgas, das Verfahren umfassend die Schritte:
- Kühlen des Gasgemisches mittels einer ersten Kühlstufe (12a) auf eine erste Temperatur unterhalb einer Kondensationstemperatur eines ersten Begleitstoffs der mehreren Begleitstoffe und oberhalb der Kondensationstemperatur des Hauptgases derart, dass der erste Begleitstoff zumindest teilweise kondensiert;
- Abscheiden zumindest eines Teils des kondensierten ersten Begleitstoffs derart, dass der erste Begleitstoff zumindest teilweise dem Gasgemisch entzogen wird;
- Kühlen des Gasgemisches mittels einer zweiten Kühlstufe (12c) auf eine zweite
Temperatur unterhalb einer Kondensationstemperatur eines zweiten Begleitstoffs der mehreren Begleitstoffe und oberhalb der Kondensationstemperatur des Hauptgases derart, dass der zweite Begleitstoff zumindest teilweise kondensiert;
- Abscheiden zumindest eines Teils des kondensierten zweiten Begleitstoffs derart, dass der zweite Begleitstoff zumindest teilweise dem Gasgemisch entzogen wird;
wobei die erste Temperatur höher ist als die zweite Temperatur, die ihrerseits höher ist als die Kondensationstemperatur des Hauptgases, wobei H₂O und CO₂ abgeschieden werden können, ohne die höheren Kohlenwasserstoffe vollständig abzuscheiden und wobei die erste Kühlstufe und die zweite Kühlstufe jeweils einen Wärmetauscher mit integriertem Reinigungselement umfassen und wobei das Gasgemisch stromab der ersten und der zweiten Kühlstufe in einer Verflüssigerstufe auf eine Temperatur unterhalb der Kondensationstemperatur des Hauptgases abgekühlt wird.

2. Verfahren gemäß Anspruch 1, ferner umfassend zumindest ein weiteres Kühlen des Gasgemisches auf zumindest eine weitere Temperatur unterhalb einer Kondensationstemperatur zumindest eines weiteren Begleitstoffs derart, dass der zumindest eine weitere Begleitstoff zumindest teilweise kondensiert,
sowie ein Abscheiden zumindest eines Teils des zumindest einen weiteren Begleitstoffs derart, dass der zumindest eine weitere Begleitstoff zumindest teilweise dem Gasgemisch entzogen wird.

3. Verfahren gemäß Anspruch 1 oder 2, ferner umfassend ein Kühlen des Gasgemisches mittels einer Reinigungsendkühlstufe auf eine Reinigungsendtemperatur, wobei die Reinigungsendtemperatur zwischen 1 K und 20 K, bevorzugt zwischen 1 K und 5 K, oberhalb der Kondensationstemperatur des Hauptgases liegt.

4. Verfahren gemäß einem der vorhergehenden Ansprüche, wobei das Gasgemisch Erdgas, Erdölbegleitgas und/oder Biogas umfasst oder daraus besteht

5. Verfahren gemäß einem der vorhergehenden Ansprüche, wobei die erste Temperatur zumindest 263 K und höchstens 303 K, insbesondere zumindest 268 K und höchstens 298 K, beträgt.

6. Verfahren gemäß einem der vorhergehenden Ansprüche, die zweite Temperatur zumindest 213 K und höchstens 255 K beträgt.

7. Verfahren gemäß einem der vorhergehenden Ansprüche, wobei das Hauptgas in der Verflüssigerstufe auf eine Temperatur abgekühlt wird, welche zumindest 1 K und maximal 60 K unterhalb der Kondensationstemperatur des Hauptgases liegt.

8. Verfahren gemäß einem der vorhergehenden Ansprüche, ferner umfassend ein zyklisches Reinigen zumindest eines Teils der Kühlstufen und/oder der Abscheider, um kondensierte Begleitstoffe zumindest teilweise abzuführen.

9. Verfahren nach einem der vorhergehenden Ansprüche, **dadurch gekennzeichnet, dass** das Gasgemisch in einer oder mehreren der Kühlstufen und/oder in der Verflüssigerstufe in indirektem Wärmeaustausch mit gasförmigem und/oder flüssigem Stickstoff gekühlt wird.

10. Verfahren nach Anspruch 9, **dadurch gekennzeichnet, dass** der Stickstoff nach dem Wärmeaustausch mit dem Gasgemisch einer Expansionsturbine zugeführt und entspannt wird.

11. Verfahren gemäß einem der vorhergehenden Ansprüche, wobei der erste und/oder der zweite Begleitstoff H₂S sind oder H₂S umfassen.

## Claims

1. Method for purifying and liquefying a gas mixture comprising a main gas consisting of methane and accompanying substances, wherein at least a first accompanying substance comprising or consisting of H₂O and a second accompanying substance comprising or consisting of CO₂ and higher hydrocarbons have a higher condensation temperature than the main gas, the method comprising the steps of:
- cooling the gas mixture by means of a first cooling stage (12a) to a first temperature below a condensation temperature of a first accompanying substance of the plurality of accompanying substances and above the condensation temperature of the main gas in such a way that the first accompanying substance at least partially condenses;
- separating at least a portion of the condensed first accompanying substance in such a way that the first accompanying substance is at least partially removed from the gas mixture;
- cooling the gas mixture by means of a second cooling stage (12c) to a second temperature below a condensation temperature of a second accompanying substance of the plurality of accompanying substances and above the condensation temperature of the main gas such that the second accompanying substance at least partially condenses;
- separating at least a portion of the condensed second accompanying substance in such a way that the second accompanying substance is at least partially removed from the gas mixture;
wherein the first temperature is higher than the second temperature, which in turn is higher than the condensation temperature of the main gas, wherein H₂O and CO₂ can be separated without completely separating the higher hydrocarbons, and wherein the first cooling stage and the second cooling stage each comprise a heat exchanger with an integrated purification element, and wherein the gas mixture is cooled downstream of the first and the second cooling stages in a condenser stage to a temperature below the condensation temperature of the main gas.

2. Method according to claim 1, further comprising at least one further cooling of the gas mixture to at least one further temperature below a condensation temperature of at least one further accompanying substance in such a way that the at least one further accompanying substance at least partially condenses, and also a separation of at least a portion of the at least one further accompanying substance in such a way that the at least one further accompanying substance is at least partially removed from the gas mixture.

3. Method according to claims 1 or 2, further comprising cooling the gas mixture by means of a purification final cooling stage to a purification final temperature, wherein the purification final temperature is between 1 K and 20 K, preferably between 1 K and 5 K, above the condensation temperature of the main gas.

4. Method according to any one of the preceding claims, wherein the gas mixture comprises or consists of natural gas, petroleum accompanying gas and/or biogas.

5. Method according to any one of the preceding claims, wherein the first temperature is at least 263 K and at most 303 K, in particular at least 268 K and at most 298 K.

6. Method according to any one of the preceding claims, the second temperature is at least 213 K and at most 255 K.

7. Method according to any one of the preceding claims, wherein the main gas is cooled in the condenser stage to a temperature that is at least 1 K and at most 60 K below the condensation temperature of the main gas.

8. Method according to any one of the preceding claims, further comprising a cyclic purification of at least some of the cooling stages and/or separators in order to at least partially discharge condensed accompanying substances.

9. Method according to any one of the preceding claims, **characterized in that** the gas mixture is cooled in one or more of the cooling stages and/or in the condenser stage in indirect heat exchange with gaseous and/or liquid nitrogen.

10. Method according to claim 9, **characterized in that,** after heat exchange with the gas mixture, the nitrogen is fed to an expansion turbine and expanded.

11. Method according to any one of the preceding claims, wherein the first and/or the second accompanying substance are H₂S or comprise H₂S.

## Revendications

1. Procédé de nettoyage et de condensation d'un mélange gazeux comprenant un gaz principal constitué de méthane et d'impuretés, au moins une première impureté, qui comprend du H₂O ou en est constituée et une deuxième impureté, qui comprend du CO₂ et des hydrocarbures supérieurs ou en est constituée, présentant une température de condensation supérieure à celle du gaz principal, le procédé comprenant les étapes :
- de refroidissement du mélange gazeux au moyen d'un premier étage de refroidissement (12a) à une première température inférieure à une température de condensation d'une première impureté des plusieurs impuretés et supérieure à la température de condensation du gaz principal, de sorte que la première impureté soit au moins partiellement condensée ;
- de dépôt d'au moins une partie de la première impureté condensée, de sorte que la première impureté soit au moins partiellement retirée du mélange gazeux ;
- de refroidissement du mélange gazeux au moyen d'un deuxième étage de refroidissement (12c) à une deuxième température inférieure à une température de condensation d'une deuxième impureté des plusieurs impuretés et supérieure à la température de condensation du gaz principal, de sorte que la deuxième impureté soit au moins partiellement condensée ;
- de dépôt d'au moins une partie de la deuxième impureté condensée, de sorte que la deuxième impureté soit au moins partiellement retirée du mélange gazeux ;
la première température étant supérieure à la deuxième température, qui de son côté est supérieure à la température de condensation du gaz principal, H₂O et CO₂ pouvant être déposés, sans déposer entièrement les hydrocarbures supérieurs et le premier étage de refroidissement et le deuxième étage de refroidissement comprenant respectivement un échangeur de chaleur avec un élément de nettoyage intégré et le mélange gazeux étant refroidi en aval du premier et du deuxième étage de refroidissement dans un étage de condenseur à une température inférieure à la température de condensation du gaz principal.

2. Procédé selon la revendication 1, comprenant en outre au moins un autre refroidissement du mélange gazeux à au moins une autre température inférieure à une température de condensation d'au moins une autre impureté, de sorte que l'au moins une autre impureté soit au moins partiellement condensée, ainsi qu'un dépôt d'au moins une partie de l'au moins une autre impureté de sorte que l'au moins une autre impureté soit au moins partiellement retirée du mélange gazeux.

3. Procédé selon la revendication 1 ou 2, comprenant en outre un refroidissement du mélange gazeux au moyen d'un etage de refroidissement d'extrémité de nettoyage à une température d'extrémité de nettoyage, la température d'extrémité de nettoyage se trouvant entre 1 K et 20 K, de préférence entre 1 K et 5 K, au-dessus de la température de condensation du gaz principal.

4. Procédé selon l'une quelconque des revendications précédentes, le mélange gazeux comprenant du gaz naturel, du gaz de pétrole associé et/ou du bio-gaz ou en étant constitué.

5. Procédé selon l'une quelconque des revendications précédentes, la première température étant au moins de 263 K et au plus de 303 K, en particulier au moins de 268 K et au plus de 298 K.

6. Procédé selon l'une quelconque des revendications précédentes, la deuxième température étant au moins de 213 K et au plus de 255 K.

7. Procédé selon l'une quelconque des revendications précédentes, le gaz principal étant refroidi dans l'étage de condenseur à une température, qui est au moins 1 K et maximum 60 K au-dessous de la température de condensation du gaz principal.

8. Procédé selon l'une quelconque des revendications précédentes, comprenant en outre un nettoyage cyclique d'au moins une partie des étages de refroidissement et/ou du séparateur, afin d'évacuer au moins partiellement les impuretés condensées.

9. Procédé selon l'une quelconque des revendications précédentes, **caractérisé en ce que** le mélange gazeux est refroidi dans un ou plusieurs des étages de refroidissement et/ou dans l'étage de condenseur par un échange de chaleur indirect avec de l'azote gazeux et/ou liquide.

10. Procédé selon la revendication 9, **caractérisé en ce que** l'azote, après l'échange de chaleur avec le mélange gazeux, est alimenté à une turbine de détente et détendu.

11. Procédé selon l'une quelconque des revendications précédentes, la première et/ou la deuxième impureté étant du H₂S ou comprenant du H₂S.
